# EUROPÄISCHE PATENTSCHRIFT

(11) **EP 1 454 696 B1**
(45) Veröffentlichungstag und Bekanntmachung des Hinweises auf die Patenterteilung: **18.10.2006**
(21) Anmeldenummer: 03024818.1
(22) Anmeldetag: 31.10.2003
(51) Int. Cl.: B23G 5/20, B23B 51/02

(54) **Spiral- und Gewindebohrer und Verfahren zu dessen Herstellung**
Thread cutting twist drill and production method thereof
Foret taraudeur et procédé de sa production

(30) Priorität: 05.03.2003 DE 20303601 U
(43) Veröffentlichungstag der Anmeldung: 08.09.2004
(73) Patentinhaber: Giess & Quanz GmbH & Co. KG, 42859 Remscheid (DE)
(72) Erfinder: Quanz, Reiner, 42859 Remscheid (DE)
(74) Vertreter: Patentanwälte Dr. Solf & Zapf

(56) Entgegenhaltungen:
- WO-A-00/27578
- WO-A-94/14575
- DE-U- 9 216 228
- US-A- 2 740 974
- US-A- 3 346 894

## Beschreibung

Die vorliegende Erfindung betrifft ein Bohrwerkzeug, bestehend aus einem Bohrerschaft mit einer Bohrerspitze und einem sich an den Bohrerschaft in axialer Richtung anschließenden Übergangsabschnitt, der in einen Einspannschaft übergeht, wobei der Bohrerschaft aus einem vorderen Spiralbohrerabschnitt und einem sich daran anschließenden Gewindebohrerabschnitt besteht, an den sich der Übergangsabschnitt anschließt. Die vorliegende Erfindung betrifft auch ein Verfahren zur Herstellung eines solchen Bohrwerkzeugs.

Derartige Bohrwerkzeuge sind z. B. aus dem deutschen Gebrauchsmuster DE-92 16 228 U bekannt und haben sich in der Praxis grundsätzlich bewährt.

Ein in der EP-B-0 675 782 offenbartes, gattungsfremdes Werkzeug ist ein Drehmomentübertragungswerkzeug, welches bevorzugt als Schraubendreher oder Schraubendrehereinsatz ausgebildet ist. Hierbei besteht das Werkzeug aus einem materialeinheitlich gefertigten und gehärteten Stahlkörper, dessen Schaftbereich nachträglich durch Wärmebeaufschlagung in seiner Härte bzw. Festigkeit geändert worden ist. Abtriebsbereich und Antriebsbereich sind dagegen nicht in ihrer Härte bzw. Festigkeit geändert worden. Derartige Drehmomentübertragungswerkzeuge werden auf Torsion beansprucht. Mittels Anlassen soll erreicht werden, dass der Schaftbereich bei Drehmomentbeaufschlagung bis zum Erreichen eines Grenzdrehmoments elastisch tordiert und bei Überschreiten des Grenzdrehmomentes um mindestens 30° plastisch verformbar ist.

Ein in der US-A-2 740 974 offenbartes, rotierend wirkendes Metall-Schneidwerkzeug ist ebenfalls gattungsfremd, insofern es keinen vorderen Spiralbohrerabschnitt und sich daran anschließenden Gewindebohrerabschnitt aufweist. An diesem Werkzeug ist eine lokale Wärmebehandlungszone vorgesehen, die mit dem Ziel einer partiellen Werkstoff Plastifizierung des Werkzeugschaftes eingebracht ist. Ein mit dem bekannten Werkzeug arbeitender Monteur erhält durch das Vorhandensein des wärmebehandelten Bereiches, der eine herabgesetzte Sprödigkeit aufweist und an einer ringförmigen Nut des Werkzeugschaftes lokalisiert ist, aufgrund eines Nachgeben des Werkzeugs bei manueller Torsions-Überbeanspruchung ein Wamsignal.

Bei einem gattungsgemäßen Bohrwerkzeug wurde festgestellt, dass beim Bohren, z. B. mit einer Handbohrmaschine, beim Umschalten der Drehrichtung, insbesondere nach dem Ansenken, Momentreaktionen auftreten, die beim Anwender eine derartige Gegenreaktion verursachen, dass ein Bruch des Bohrwerkzeugs erfolgen kann.

Der Erfindung liegt die Aufgabe zu Grunde, ein verbessertes Bohrwerkzeug der eingangs genannten Art zur Verfügung zu stellen, bei dem die Bruchgefahr erheblich reduziert ist, d. h., sowohl einen Spiral- und Gewindebohrer, der unter den dargestellten Betriebsbedingungen eine höhere Stabilität besitzt, zu schaffen, als auch ein Verfahren zur Herstellung eines solchen Werkzeugs anzugeben.

Erfindungsgemäß wird dies dadurch erreicht, dass der Übergangsabschnitt in einem Wärmeeinflußbereich, welcher eine Hauptwärmezone aufweist, die in einem Bereich liegt, der sich bei etwa einem Drittel der Länge des Übergangsabschnitts - ausgehend vom Ende des Gewindebohrerabschnitts - befindet, derart wärmebehandelt ist, dass der Übergangsabschnitt eine im Vergleich zum Einspannschaft und/oder Bohrerschaft höhere Biegeelastizität - ausgedrückt durch einen Wert der möglichen bruchfreien Durchbiegung bei Lastbeanspruchung durch Biegung - aufweist.

Bei dem Umschalten der Drehrichtung kann das Bohrwerkzeug verrissen werden, wobei das bekannte Bohrwerkzeug bricht, und zwar in der Nähe des Gewindebohrerabschnitts in einem Bereich, welcher etwa 30% der Länge des Übergangsabschnitts, ausgehend vom Ende des Gewindebohrerabschnitts, beträgt. Der Erfindung liegt nun die Erkenntnis zu Grunde, dass beim Umschalten der Drehrichtung das Bohrwerkzeug insbesondere auf Biegung beansprucht wird. Durch die erfindungsgemäße Wärmebehandlung wird die Biegeelastizität des Bohrwerkzeugs verbessert, so dass dieses die auftretenden Biegebeanspruchungen weitgehend aufnehmen kann, Insbesondere wird erreicht, dass der Übergangsabschnitt wesentlich biegeelastischer ist, als der Bohrerschaft und/oder der Einspannschaft mit einem vorgelagerten Ansenkabschnitt.

Gemäß der Erfindung ist vorgesehen, dass der durch die Wärmebehandlung erzeugte Wärmeeinflußbereich eine Hauptwärmezone aufweist. Wie bereits ausgeführt, liegt diese Hauptwärmezone etwa in einem Bereich, der 1/3 der Länge des Übergangsabschnitts - ausgehend vom Ende des Gewindebohrerabschnitts - beträgt, so dass der am stärksten belastete Bereich jedenfalls wärmebehandelt wird. Der Wärmeeinflußbereich reicht auf der zum Gewindebohrerabschnitt weisenden Seite des Übergangsabschnitts etwas in den Gewindebohrerabschnitt hinein, und endet auf der zum Einspannschaft weisenden Seite weit vor dem Ansenkabschnitt. Der Wärmeeinflußbereich kann z. B. bei ca. halber Länge des Übergangsabschnittes vor dem Ansenkbereich enden. Der Wärmeeinflußbereich kann aber auch direkt vor dem Ansenkbereich enden. Damit ist sichergestellt, dass der Ansenkabschnitt die selben Werkstoffeigenschaften aufweist, wie der Einspannschaft und die Bohrerspitze.

Weitere vorteilhafte Ausgestaltungen der Erfindung sind den Unteransprüchen enthalten, und, einschließlich ihrer Vorteile, in der nachfolgenden Figurenbeschreibung eines bevorzugten Ausführungsbeispiels genannt.

Es zeigen:
- Fig. 1: einen Spiral- und Gewindebohrer in Seitenansicht,
- Fig. 2: den Spiral- und Gewindebohrer gemäß Fig. 1 mit angedeutetem Wärmeeinflußbereich und
- Fig. 3: eine Teil-Seitenansicht nur des Einspannschaftes in einer altemativen Ausführung.

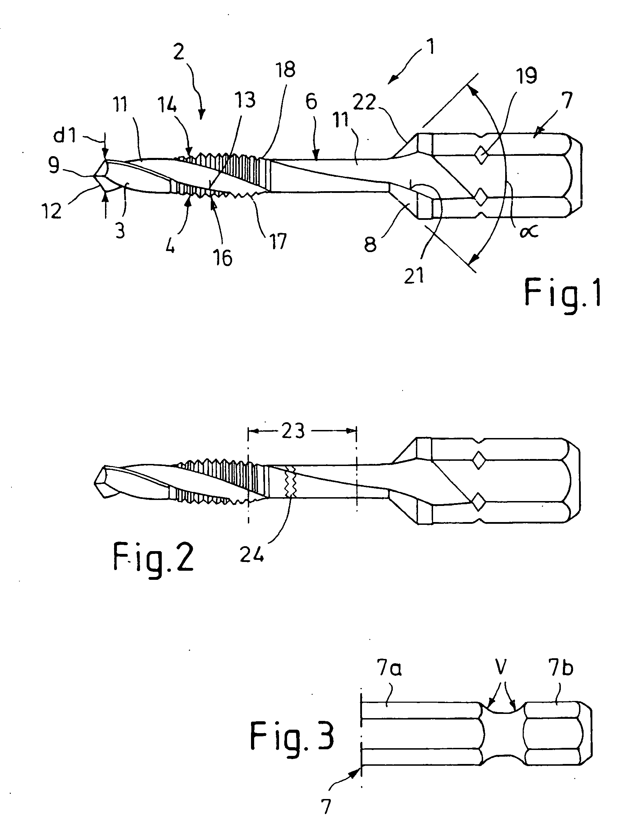

In den verschiedenen Figuren der Zeichnung sind die unterschiedlichen Teile lediglich in Figur 1 mit den Bezugszeichen versehen, wobei in Figur 2 hierauf verzichtet wurde, um übersichtlich darzustellen, wie der Wärmeeinflußbereich ausgebildet ist.

Wie sich aus den Figuren 1 und 2 jeweils ergibt, besitzt ein Spiral- und Gewindebohrer 1 - im folgenden vereinfacht lediglich "Bohrer" genannt - einen Bohrerschaft 2, der aus einem vorderen Spiralbohrerabschnitt 3 und einem sich daran anschließenden Gewindebohrerabschnitt 4 besteht. An den Gewindebohrerabschnitt 4 schließt sich über einen Übergangsabschnitt 6, der insbesondere im Querschnitt kreisförmig und mit einem gegenüber dem Gewindebohrerabschnitt 4 reduzierten Durchmesser ausgebildet ist, ein Einspannschaft 7 an.

Zwischen dem Übergangsabschnitt 6 und dem Einspannschaft 7 ist ein Ansenkabschnitt 8 angeordnet bzw. derart ausgebildet, dass hiermit ein in einem Arbeitsgang mit dem Spiralbohrerabschnitt 3 und dem Gewindebohrerabschnitt 4 hergestelltes Gewindeloch nachträglich angesenkt (entgratet, angefast) werden kann.

Der Spiralbohrerabschnitt 3 weist eine insbesondere selbstzentrierende Bohrerspitze 9 auf, von der ausgehend mindestens eine Span-Nut 11 über den Bohrerschaft 2 hinweg verläuft. Dabei handelt es sich im bevorzugten Ausführungsbeispiel gemäß Fig. 1 und 2 um eine "drallgenutete" (schraubenlinienförmige) Ausführung. Wie dargestellt, sind vorzugsweise zwei diametral gegenüberliegende Span-Nuten 11 vorgesehen. Durch die insbesondere eingeschliffenen Span-Nuten 11 sind im Spiralbohrerabschnitt 3 Schneidkanten 12 sowie im Gewindebohrerabschnitt 4 Schneidzähne 13 gebildet.

Der Gewindebohrerabschnitt 4 besteht aus einem vorderen, sich an den Spiralbohrerabschnitt 3 anschließenden Anschnittkegel 14 und einem sich an diesen anschließenden, ein im Querschnitt "vollständiges" Gewindegangprofil aufweisenden Gewindeteil 16. Hierbei weist der Anschnittkegel 14 bevorzugt einen Hinterschliff auf. Die im Bereich des Anschnittkegels 14 angeordneten Schneidzähne 13 besitzen gegenüber dem "vollständigen" Profil der im Bereich des Gewindeteils 16 angeordneten Gewindegänge reduzierte und in Richtung des Gewindeteils 16 - entsprechend einem Konuswinkel des Anschnittkegels 14 - zunehmende Zahnquerschnitte. An den "vollständigen" Gewindeteil 16 schließt sich ein Gewindeteil 17 mit abgeflachtem Gewindeprofil an.

Im dargestellten bevorzugten Ausführungsbeispiel ist das Gewindeteil 17 konusförmig ausgebildet. Die im Bereich des konusförmigen Gewindeteils 17 angeordneten Schneidzähne 13 besitzen gegenüber dem "vollständigen" Profil der im Bereich des Gewindeteils 16 angeordneten Gewindegänge reduzierte und in Richtung des Übergangsabschnitts 6 - entsprechend dem Konuswinkel des konusförmigen Gewindeteils 17 - abnehmende Zahnquerschnitte. In dem in Fig. 1 und 2 dargestellten Ausführungsbeispiel erstreckt sich der Anschnittkegel 14 über 3 bis 3,5 Gewindegänge. Der Gewindeteilabschnitt 16 mit dem "vollständigen" Gewindegangprofil erstreckt sich über ca. 2,5 bis 3 Gewindegänge. Das sich daran anschließende Gewindeteil 17 erstreckt sich über ca. 5,5 bis 6 Gewindegänge. Diese Anzahl Gewindegänge kann im Sinne der Erfindung aber auch jeweils unterschiedlich sein.

Der Gewindebohrerabschnitt 4 weist an seinem dem Ansenkabschnitt 8 zugekehrten Ende einen rückwärtigen Anschnittkegel 18 auf.

Der Spiralbohrerabschnitt 3 besitzt einen Durchmesser d1, der an den Kemdurchmesser des jeweiligen Gewindes angepaßt ist. Normalerweise ist der Durchmesser d1 gleich einem Außendurchmesser d2 des Gewindeteils 16, abzüglich der jeweiligen Gewindesteigung. Beispielsweise beträgt im Falle des metrischen Gewindes M6 d1=6mm-1 mm=5mm.

Der Einspannschaft 7 ist vorzugsweise im Querschnitt als Sechskant ausgebildet. Die Größe bzw. der Querschnitt des Sechskantes entspricht aber insbesondere derjenigen von solchen Sechskanten, die üblicherweise bei sogenannten "Schrauber-Bits" ebenfalls Verwendung finden (1/4 Zoll), so dass der Bohrer 1 praktisch einen "Bohr- und Gewinde-Bit" bildet, der auf besonders einfache Weise in die vor allem bei Schraubermaschinen (sogenannte "Akkuschrauber") vorgesehenen Innensechskant-Aufnahmen sowie aber vorteilhafterweise ohne weiteres auch in übliche Bohrmaschinen-Spannfutter eingesetzt werden kann. Zur Arretierung in einer Innensechskant-Aufnahme weist der Einspannschaft 7 auf seinem Außenumfang, und zwar insbesondere im Bereich der Kanten des Sechskantes, Haltekerben 19 auf.

Alternativ zu dieser bevorzugten Ausführungsform liegt es grundsätzlich aber ebenfalls im Bereich der Erfindung, den Einspannschaft 7 mit anderer Querschnittsform, beispielsweise kreisförmig, auszubilden. Auch eine Ausführung, wie sie in Fig. 3 dargestellt ist, ist möglich, wobei der im Querschnitt sechseckige Einspannschaft 7 eine umlaufende, nut- bzw. rillenförmige Umfangsvertiefung V aufweist, die den Einspannschaft 7 axial in zwei Abschnitte 7a und 7b unterteilt. Diese Ausführung entspricht der Norm DIN 3126 E 6.3, und sie wird in einigen Regionen, z. B. in den U.S.A., bevorzugt verwendet.

Bei dem zwischen dem Übergangsabschnitt 6 und dem Einspannschaft 7 angeordneten Ansenkabschnitt 8 ist es besonders vorteilhaft, dass der axiale Abstand zwischen dem Ende des Gewindebohrerabschnitts 4 und dem Beginn des Ansenkabschnitts 8 zumindest geringfügig größer ist als die maximal zulässige Materialdicke des mit einem Durchgangsgewindeloch zu versehenen Materials. Es ist hierdurch gewährleistet, dass während des Bearbeitungsganges des Ansenkens der Gewindebohrerabschnitt 4 bereits vollständig außerhalb des entsprechenden Gewindelochs angeordnet ist, d. h. nicht mehr im Eingriff mit dem Gewinde steht, so dass sich der erfindungsgemäße Bohrer 1 beim Ansenken, wobei ja nur ein ganz geringfügiger axialer Vorschub auftritt, frei drehen kann.

Der Ansenkabschnitt 8 besitzt mindestens eine Schneidkante 21, im dargestellten Ausführungsbeispiel - wegen der zwei Span-Nuten 11 - zwei diametral gegenüberliegende Schneidkanten 21. Diese Schneidkanten sind derart schräg zur Längsachse des Bohrers 1 angeordnet, dass hierdurch ein Ansenkwinkel α im Bereich von 60° bis 120°, insbesondere etwa 90°, gebildet ist.

Der Ansenkabschnitt 8 ist von einem sich in Richtung des Einspannschaftes 7 ausgehend von dem Übergangsabschnitt 6 etwa konisch erweiternden Schaftabschnitt 22 gebildet. Hierbei sind die Schneidkanten 21 dadurch gebildet, dass sich die Span-Nuten 11 in Richtung des Einspannschaftes 7 bis in den Bereich des sich konisch erweiternden Schaftabschnittes 22 erstrecken. Wie dargestellt, erstrecken sich die Span-Nuten 11 vorzugsweise sogar etwas über den konischen Schaftabschnitt 22 hinaus in den Bereich des Einspannschaftes 7.

Der in den Fig. 1 und 2 dargestellte bevorzugte Spiral- und Gewindebohrer ist einheitlich aus einem Material hergestellt. Dieses Material ist z. B. ein Schnellarbeitsstahl mit der Werkstoffnummer S 6-5-2 (bzw. früher 1.3343 gemäß älterer DIN EN 10027 - Teil 1). Derartige Schnellarbeitsstähle besitzen - aufgrund einer Vergütung - bestimmte Werkstoffeigenschaften. Wesentlich hierbei ist eine hohe Härte und eine geringe Biegeelastizität.

Erfindungsgemäß ist aber vorgesehen, den Übergangsabschnitt 6 nachträglich derart wärmezubehandeln, dass hierdurch eine im Vergleich zum Bohrerschaft 2 und Einspannschaft 7 sowie Ansenkabschnitt 8 höhere Biegeelastizität erreicht wird. Diese liegt bei ca. 50% über der ursprünglichen Biegeelastizität.

Es hat sich gezeigt, dass ein konventioneller Spiral- und Gewindebohrer z. B. bei einem M5-Gewinde einer Durchbiegung von lediglich 1,53 mm standhielt, bevor dieser gebrochen ist. Der selbe Spiral- und Gewindebohrer für ein M5-Gewinde, diesmal aber erfindungsgemäß wärmebehandelt, hielt einer Durchbiegung von 2,33 mm stand, wobei gleiche Versuchsbedingungen vorlagen.

Erfindungsgemäß weist der Bohrer 1 einen Wärmeeinflußbereich 23 mit einer Hauptwärmezone 24 auf. Die Hauptwärmezone 24 ist vorzugsweise bei etwa 1/3 der axialen Länge des Übergangsabschnitts 6, ausgehend vom Ende des rückwärtigen Anschnittkegels 18 angeordnet. Der Wärmeeinflußbereich 23 reicht auf der zum Gewindebohrerabschnitt 4 weisenden Seite des Übergangsabschnittes 6 etwas in den rückwärtigen Anschnittkegel 18 hinein, und endet auf der zum Einspannschaft weisenden Seite weit vor dem Ansenkabschnitt 8. Der Wärmeeinflußbereich 23 kann z. B. bei halber Länge des Übergangsabschnitts 6 enden, kann aber auch direkt vor diesem enden.

Eine derartige Verbesserung der Biegeelastizität wird vorzugsweise mittels einer Hochfrequenz-Anlage zur induktiven Erwärmung erreicht. Über InfrarotStrahlungspyrometer kann hierbei sowohl die Temperatur als auch die Einwirkungszeit überwacht und dadurch genau gesteuert werden.

Eine beispielhafte Hochfrequenz-Anlage ist z. B. in einem Temperaturbereich von 600°C bis 900°C einstellbar. Die Hochfrequenz-Anlage weist eine TemperaturRegeleinrichtung zur berührungslosen Temperaturüberwachung auf (InfrarotStrahlungspyrometer). Mittels einer Meßfleckmarkierung wird die Hauptwärmezone 24 erfasst. Hierbei kann die Ist-Temperatur derart eingestellt werden, dass bei Bohrern zum Herstellen von Bohrlöchern mit geringem Durchmessern, z. B. für M3, eine geringere Temperatur, und bei Bohrern zum Herstellen von Bohrlöchern mit größerem Durchmesser, z. B. für M10, eine höhere Temperatur eingestellt wird.

Besonders vorteilhaft ist eine sehr kurze Einwirkungszeit der eingestellten Temperatur. Die Einwirkungszeit beträgt vorzugsweise nur ca. 0,5 bis 2 Sekunden.

Sowohl durch die genaue Positionierung als auch durch die kurze Erwärmung im Sekundenbereich kann vorteilhafterweise eine Kühlung des Einspannschaftes 7 mit dem vorgelagerten Ansenkabschnitt 8 und des Bohrerschaftes 2 entfallen.

Weiter wurden die Härtewerte erheblich verringert. Üblicherweise weist der bevorzugte Schnellarbeitsstahl eine Härte von 65 (gemessen in HRA (Rockwell C)) auf. Derartige Stähle können elastische Verformungen im Fall von Torsionsbeanspruchungen aufnehmen. Eine plastische Verformbarkeit ist jedoch praktisch nicht gegeben, vielmehr tritt sofortiger Bruch auf. Erfindungsgemäß wird durch die Wärmebehandlung die Biegeelastizität verbessert, wobei sich eine Härte im Bereich um etwa nur HRA 38 bis 42 (Rockwell C) ergibt. Weitere reduzierte Härtewerte im Bereich des Wärmeeinflußbereiches 23 sind der nachfolgenden Tabelle für zwei Ausführungsbeispiele zu entnehmen (jeweils mit einer Toleranz von ± 2):

| Herzustellendes Gewinde | M3 | M4 | M5 | M6 | M8 | M10 |
|---|---|---|---|---|---|---|
| Härte HRA (Rockwell C) ca. | | | | | | |
| Ausführung A | 38 | 40 | 42 | 40 | 40 | 40 |
| bevorzugte Ausführung B | 39 | 40 | 40 | 41 | 41 | 42 |

Die Erfindung ist nicht auf das dargestellte und beschriebene Ausführungsbeispiel beschränkt, sondern umfasst auch alle im Sinne der Ansprüche wirkenden Ausführungen. Insbesondere kann der Spiralbohrerabschnitt 3 eine Bohrerspitze 9 aufweisen, die einen Kreuzanschliff aufweist. Des Weiteren kann der beschriebene Spiral- und Gewindebohrer zum Herstellen von Gewindelöchem beispielsweise in der Größe M3 bis M10 eingesetzt werden.

## Patentansprüche

1. Bohrwerkzeug, bestehend aus einem Bohrerschaft (2) mit einer Bohrerspitze (9) und einem sich an den Bohrerschaft (2) in axialer Richtung anschließenden Übergangsabschnitt (6), der in einen Einspannschaft (7) übergeht, wobei der Bohrerschaft (2) aus einem vorderen Spiralbohrerabschnitt (3) und einem sich daran anschließenden Gewindebohrerabschnitt (4) besteht, an den sich der Übergangsabschnitt (6) anschließt,
**dadurch gekennzeichnet, dass** der Übergangsabschnitt (6) in einem Wärmeeinflußbereich (23), welcher eine Hauptwärmezone (24) aufweist, die in einem Bereich liegt, der sich bei etwa einem Drittel der Länge des Übergangsabschnitts (6) - ausgehend vom Ende des Gewindebohrerabschnitts (4) - befindet, derart wärmebehandelt ist, dass der Übergangsabschnitt (6) eine im Vergleich zum Einspannschaft (7) und/oder Bohrerschaft (2) höhere Biegeelastizität - ausgedrückt durch einen Wert der möglichen bruchfreien Durchbiegung bei Lastbeanspruchung durch Biegung - aufweist.

2. Bohrwerkzeug nach Anspruch 1,
**dadurch gekennzeichnet**, das zwischen dem Übergangsabschnitt (6) und dem Einspannschaft (7) ein Ansenkabschnitt (8) angeordnet ist.

3. Bohrwerkzeug nach Anspruch 1 oder 2,
**dadurch gekennzeichnet, dass** der Gewindebohrerabschnitt (4) aus einem vorderen, sich an den Spiralbohrerabschnitt (3) anschließenden Anschnittkegel (14) und einem sich an diesen anschließenden, ein im Querschnitt vollständiges Gewindegangprofil aufweisenden Gewindeteil (16) besteht, wobei die im Bereich des Anschnittkegels (14) angeordneten Schneidzähne (13) gegenüber dem vollständigen Profil der im Bereich des Gewindeteils (16) angeordneten Gewindegänge reduzierte und in Richtung des Gewindeteils (16) - entsprechend einem Konuswinkel des Anschnittkegels (14) - zunehmende Zahnquerschnitte aufweist, wobei an den vollständigen Gewindeteil (16) sich ein Gewindeteil (17) mit abgeflachtem Gewindegangprofil in Richtung zum Einspannschaft (7) anschließt.

4. Bohrwerkzeug nach Anspruch 3,
**dadurch gekennzeichnet, dass** das Gewindeteil (17) konusförmig ausgebildet ist, und die im Bereich des konusförmigen Gewindeteils (17) angeordneten Schneidzähne (13) gegenüber dem vollständigen Profil der im Bereich des Gewindeteils (16) angeordneten Gewindegänge reduzierte und in Richtung des Übergangsabschnitts (6) - entsprechend dem Konuswinkel des konusförmigen Gewindeteils (17) - abnehmende Zahnquerschnitte aufweisen.

5. Bohrwerkzeug nach einem der vorhergehenden Ansprüche,
**dadurch gekennzeichnet, dass** der Gewindebohrerabschnitt (4) an seinem dem Ansenkabschnitt (8) zugekehrten Ende einen rückwärtigen Anschnittkegel (18) aufweist.

6. Bohrwerkzeug nach einem der vorhergehenden Ansprüche,
**dadurch gekennzeichnet, dass** derAnsenkabschnitt(8) mindestens eine Schneidkante (21) aufweist.

7. Bohrwerkzeug nach einem der vorhergehenden Ansprüche,
**dadurch gekennzeichnet, dass** der Ansenkabschnitt (8) zwei diametral gegenüberliegende Schneidkanten (21) aufweist, die derart schräg zu einer Längsachse des Bohrers (1) angeordnet sind, dass hierdurch ein Ansenkwinkel (α) im Bereich von 60° bis 120°, insbesondere etwa 90° gebildet ist.

8. Bohrwerkzeug nach einem der Ansprüche 5 bis 7,
**dadurch gekennzeichnet, dass** die Hauptwärmezone (24) bei ca. 30 % der Länge des Übergangsabschnitts (6), ausgehend vom rückwärtigen Anschnittkegel (18), in dem Übergangsabschnitt (6) angeordnet ist.

9. Bohrwerkzeug nach einem der vorhergehenden Ansprüche,
**dadurch gekennzeichnet, dass** der Wärmeeinflußbereich (23) zum Gewindebohrerabschnitt (4) hin verlaufend innerhalb des Anschnittkegels (18) endet.

10. Bohrwerkzeug nach einem der vorhergehenden Ansprüche,
**dadurch gekennzeichnet, dass** der Wärmeeinflußbereich (23) zum Ansenkabschnitt (8) hin verlaufend jedenfalls vor diesem endet.

11. Bohrwerkzeug nach einem der vorhergehenden Ansprüche,
**gekennzeichnet durch** einen Schnellarbeitsstahl als Werkzeugwerkstoff, vorzugsweise einen mit der Werkstoffnummer 1.3343 nach DIN EN 10027 Teil 1, bzw. S 6-5-2.

12. Bohrwerkzeug nach einem der vorhergehenden Ansprüche,
**dadurch gekennzeichnet, dass** der Einspannschaft (7) einen sechseckigen Querschnitt aufweist, wobei zur Arretierung des Einspannschaftes (7) in einer Innensechskant-Aufnahme einer Antriebsmaschine entweder im Bereich der Ecken des Sechseck-Querschnittes Haltekerben (19) vorgesehen sind oder eine umlaufende, nut- bzw. rillenförmige Umfangsvertiefung (V) gebildet ist.

13. Verfahren zum Herstellen eines Bohrwerkzeuges, insbesondere nach einem der Ansprüche 1 bis 12,
**dadurch gekennzeichnet, dass** ein Übergangsabschnitt (6) zwischen einem, einen vorderen Spiralbohrerabschnitt (3) und einen sich daran anschließenden Gewindebohrerabschnitt (4) aufweisenden Bohrerschaft (2) und einem Einspannschaft (7) in einem Wärmeeinflußbereich (23), welcher eine Hauptwärmezone (24) aufweist, die in einem Bereich liegt, der sich bei etwa einem Drittel der Länge des Übergangsabschnitts (6) - ausgehend vom Ende des Gewindebohrerabschnitts (4) - befindet, einer Wärmebehandlung derart ausgesetzt wird, dass der Übergangsabschnitt (6) innerhalb des Wärmeeinflußbereichs (23) eine im Vergleich zum Einspannschaft (7) und/oder zum Bohrerschaft (2) höhere Biegeelastizität - ausgedrückt durch einen Wert der möglichen bruchfreien Durchbiegung bei Lastbeanspruchung durch Biegung - erhält.

14. Verfahren nach Anspruch 13,
**dadurch gekennzeichnet, dass** die Wärmebehandlung induktiv mit einer Hochfrequenz-Anlage und insbesondere in einem Temperaturbereich von 600°C bis 900°C durchgeführt wird.

15. Verfahren nach Anspruch 13 oder 14,
**dadurch gekennzeichnet, dass** die Wärmebehandlung mit einer kurzen Einwirkungszeit von 0,5 bis 2 s durchgeführt wird.

## Claims

1. A drilling tool, comprising a drill shaft (2) with a drill bit (9) and a transition portion (6), which adjoins the drill shaft (2) in the axial direction and merges into a clamping shaft (7), the drill shaft (2) comprising a front twist-drill portion (3) and a screw-tap portion (4) which adjoins said twist-drill portion and is adjoined by the transition portion (6),
**characterised in that**, in a heat-affected region (23), which has a main heat zone (24) situated in a region which - starting from the end of the screw-tap portion (4) - is located at approximately a third of the length of the transition portion (6), the transition portion (6) is heat-treated in such a way that the transition portion (6) has a greater flexibility - expressed by a value of the possible fracture-free compliance when subjected to a load by bending - than the clamping shaft (7) and/or drill shaft (2).

2. A drilling tool according to Claim 1, **characterised in that** a countersink portion (8) is arranged between the transition portion (6) and the clamping shaft (7).

3. A drilling tool according to Claim 1 or 2,
**characterised in that** the screw-tap portion (4) comprises a front chamfer cone (14), which adjoins the twist-drill portion (3), and a threaded part (16) which adjoins the front chamfer cone and has a complete thread profile in cross-section, the cutting teeth (13) arranged in the region of the chamfer cone (14) having reduced tooth cross-sections with respect to the complete profile of the threads arranged in the region of the threaded part (16) and increased tooth cross-sections in the direction of the threaded part (16) - corresponding to a cone angle of the chamfer cone (14), a threaded part (17) adjoining the complete threaded part (16) with a flattened thread profile in the direction of the clamping shaft (7).

4. A drilling tool according to Claim 3,
**characterised in that** the threaded part (17) is of a conical construction, and the cutting teeth (13) arranged in the region of the conical threaded part (17) have reduced tooth cross-sections with respect to the complete profile of the threads arranged in the region of the threaded part (16) and decreasing tooth cross-sections in the direction of the transition portion (6) - corresponding to the cone angle of the conical threaded part (17).

5. A drilling tool according to one of the preceding claims,
**characterised in that** the screw-tap portion (4) has a rear chamfer cone (18) at its end facing the countersink portion (8).

6. A drilling tool according to one of the preceding claims,
**characterised in that** the countersink portion (8) has at least one cutting edge (21).

7. A drilling tool according to one of the preceding claims,
**characterised in that** the countersink portion (8) has two diametrically opposed cutting edges (21), which are arranged at an angle to a longitudinal axis of the drill (1) in such a way that this produces a countersink angle (α) in the range between 60° and 120°, particularly approximately 90°.

8. A drilling tool according to one of Claims 5 to 7,
**characterised in that** the main heat zone (24) is arranged in the transition portion (6) at approximately 30% of the length of the transition portion (6), starting from the rear chamfer cone (18).

9. A drilling tool according to one of the preceding claims, **characterised in that** the heat-affected region (23), extending towards the screw-tap portion (4), ends inside the chamfer cone (18).

10. A drilling tool according to one of the preceding claims,
**characterised in that** the heat-affected region (23), extending towards the countersink portion (8), ends in any case before this countersink portion.

11. A drilling tool according to one of the preceding claims,
**characterised by** a high-speed steel as the tool material, preferably one with the material number 1.3343 according to DIN EN 10027 part 1, or S 6-5-2.

12. A drilling tool according to one of the preceding claims,
**characterised in that** the clamping shaft (7) has a hexagonal cross-section, retaining notches (19) either being provided in the region of the corners of the hexagon cross-section, or a continuous groove-shaped or channel-shaped circumferential depression (V) being formed, for the purpose of locking the clamping shaft (7) in a hexagon-socket receiving means of a drive machine.

13. A process for manufacturing a drilling tool, particularly according to one of Claims 1 to 12,
**characterised in that**, in a heat-affected region (23), which has a main heat zone (24) situated in a region which - starting from the end of the screw-tap portion (4) - is located at approximately a third of the length of a transition portion (6) between a drill shaft (2), which has a front twist-drill portion (3) and a screw-tap portion (4) adjoining said twist-drill portion, and a clamping shaft (7), the transition portion (6) is subjected to a heat-treatment in such a way that the transition portion (6) inside the heat-affected region obtains a greater flexibility - expressed by a value of the possible fracture-free compliance when subjected to a load by bending - than the clamping shaft (7) and/or drill shaft (2).

14. A process according to Claim 13,
**characterised in that** the heat treatment is carried out inductively by means of a high-frequency system, and particularly in a temperature range between 600°C and 900°C.

15. A process according to Claim 13 or 14,
**characterised in that** the heat treatment is carried out with a short action time of 0.5 to 2 s.

## Revendications

1. Outil de perçage, comprenant une tige de perçage (2) et une pointe de perçage (9) et une partie de transition (6) se raccordant à la tige (2) dans le sens axial, qui fait place à une partie de serrage (7), la tige de perçage (2) comprenant une partie de foret hélicoïdal (3) et une partie de taraud (4) qui se raccorde à la première partie et à laquelle se raccorde la partie de transition (6).
**caractérisé en ce que** la partie de transition (6) est traitée thermiquement dans une zone d'influence de chaleur (23), qui présente une zone de chaleur principale (24), laquelle se situe dans une zone qui se trouve sur environ un tiers de la longueur de la partie de transition (6) - à partir de l'extrémité de la partie de taraud (4) -, de telle sorte que la partie de transition (6) présente une élasticité de flexion plus élevée par rapport à la tige de serrage (7) et/ou la tige de perçage (2), exprimée par une valeur de flexion complète possible sans rupture avec sollicitation de charge par flexion.

2. Outil de perçage selon la revendication 1,
**caractérisé en ce qu'**une partie d'abaissement (8) est disposée entre la partie de transition (6) et la tige de serrage (7).

3. Outil de perçage selon la revendication 1 ou 2,
**caractérisé en ce que** la partie de taraud (4) comprend un cône d'attaque (14) avant et se raccordant à la partie de foret hélicoïdal (3) et une partie de filetage (16) se raccordant à la première et présentant un profil de pas de filetage complet en section, les dents de coupe (13) disposées dans la zone du cône d'attaque (14) présentant des sections de dent réduites par rapport au profil complet des pas de filetage disposés dans la zone de la partie de filetage (16) et croissant en direction de la partie de filetage (16) - en fonction d'un angle d'entrée du cône d'attaque (14) -, une partie de filetage (17) avec un profil de pas de filetage aplati se raccordant à la partie de filetage (16) complète en direction de la tige de serrage (7).

4. Outil de perçage selon la revendication 3,
**caractérisé en ce que** la partie de filetage (17) est conçue avec une forme conique, et les dents de coupe (13) disposées dans la zone de la partie de filetage (17) conique présentent des sections de dent réduites par rapport au profil complet des pas de filetage disposés dans la zone de la partie de filetage (16) et décroissant en direction de la partie de transition (6) - en fonction de l'angle de cône de la partie de filetage conique (17).

5. Outil de perçage selon l'une quelconque des revendications précédentes,
**caractérisé en ce que** la partie de taraud (4) présente un cône d'attaque (18) arrière sur son extrémité tournée vers la partie d'abaissement (8).

6. Outil de perçage selon l'une quelconque des revendications précédentes,
**caractérisé en ce que** la partie d'abaissement (8) présente au moins une arête de coupe (21).

7. Outil de perçage selon l'une quelconque des revendications précédentes,
**caractérisé en ce que** la partie d'abaissement (8) présente deux arêtes de coupe (21) diamétralement opposées, qui sont disposées en biais par rapport à une axe longitudinal du foret (1), de telle sorte que, de ce fait, un angle d'abaissement (α) est formé dans la plage de 60° à 120°, en particulier environ 90°.

8. Outil de perçage selon l'une quelconque des revendications 5 à 7,
**caractérisé en ce que** la zone de chaleur principale (24) est disposée pour environ 30% de la longueur de la partie de transition (6), à partir du cône d'attaque (18) arrière, dans la partie de transition (6).

9. Outil de perçage selon l'une quelconque des revendications précédentes,
**caractérisé en ce que** la zone d'influence thermique (23) se termine à l'intérieur du cône d'attaque (18) en direction de la partie de taraud (4).

10. Outil de perçage selon l'une quelconque des revendications précédentes,
**caractérisé en ce que** la zone d'influence thermique (23), agencée en direction du la partie d'abaissement (8), se termine dans tous les cas avant celle-ci.

11. Outil de perçage selon l'une quelconque des revendications précédentes,
**caractérisé par** un acier rapide comme matériau d'outil, de préférence un acier portant le numéro de matériau 1.3343 selon DIN EN 10027 partie 1 ou S 6-5-2.

12. Outil de perçage selon l'une quelconque des revendications précédentes,
**caractérisé en ce que** la tige de serrage (7) présente une section hexagonale, soit des entailles de retenue (19) étant prévues dans la zone des angles de la section hexagonale soit une cavité de pourtour (V) périphérique, en forme de rainure ou de gorge étant formée, pour l'arrêt de la tige de serrage (7) dans un logement à six pans creux d'une machine d'entraînement.

13. Procédé pour la fabrication d'un outil de perçage en particulier selon l'une quelconque des revendications 1 à 12,
**caractérisé en ce qu'**une partie de transition (6) entre une tige de perçage (2) présentant une partie de foret hélicoïdal (3) avant et une partie de taraud (4) se raccordant à la première et une tige de serrage (7) dans une zone d'influence thermique (23), qui présente une zone de chaleur principale (24), qui est disposée dans une zone qui se trouve sur environ un tiers de la longueur de la partie de transition (6) - à partir de l'extrémité de la partie de taraud (4) -, est exposée à un traitement thermique de telle sorte que la partie de transition (6) reçoit à l'intérieur de la zone d'influence thermique (23) une élasticité de flexion supérieure par rapport à la tige de serrage (7) et/ou à la tige de perçage (2), exprimée par une valeur de flexion complète possible sans rupture en cas de sollicitation de charge par flexion.

14. Procédé selon la revendication 13,
**caractérisé en ce que** le traitement thermique est effectué de façon inductive avec une installation à haute fréquence et en particulier dans une plage de température de 600°C à 900°C.

15. Procédé selon la revendication 13 ou 14,
**caractérisé en ce que** le traitement thermique est effectué avec un temps d'action court de 0,5 à 2 s.
